(19) Europäisches Patentamt
European Patent Office
Office européen des brevets

(11) EP 1 794 209 B1

(12) **EUROPEAN PATENT SPECIFICATION**

(45) Date of publication and mention of the grant of the patent:
**08.10.2008 Bulletin 2008/41**

(21) Application number: **05774799.0**

(22) Date of filing: **26.08.2005**

(51) Int Cl.:
***C08G 65/18*** *(2006.01)*

(86) International application number:
**PCT/DK2005/000547**

(87) International publication number:
**WO 2006/021218 (02.03.2006 Gazette 2006/09)**

(54) **POLYETHER POLYMER MATRIX**

POLYETHER-POLYMER-MATRIX

MATRICE POLYMÈRE POLYÉTHER

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.08.2004 DK 200401295**

(43) Date of publication of application:
**13.06.2007 Bulletin 2007/24**

(73) Proprietor: **Novo Nordisk A/S**
**2880 Bagsværd (DK)**

(72) Inventors:
- **JOHANNSEN, Ib**
**DK-3500 Værløse (DK)**
- **GAVELIN, Patrik**
**SE-25733 Rydebäck (SE)**
- **GALLEGO, Monica, Ramos**
**DK-4320 Lejre (DK)**

(74) Representative: **Inspicos A/S**
**Kogle Allé 2**
**P.O. Box 45**
**2970 Hørsholm (DK)**

(56) References cited:
**WO-A-00/18823** **WO-A-03/031489**

- **RADEMANN J ET AL: "SPOCC: A RESIN FOR SOLID-PHASE ORGANIC CHEMISTRY AND ENZYMATIC REACTIONS ON SOLID PHASE" JOURNAL OF THE AMERICAN CHEMICAL SOCIETY, AMERICAN CHEMICAL SOCIETY, WASHINGTON, DC, US, vol. 121, 1999, pages 5459-5466, XP000882852 ISSN: 0002-7863**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

All patent and non-patent references cited in the application are hereby incorporated by reference in their entirety.

FIELD OF INVENTION

The present invention relates to polyether resins, methods for their manufacture and uses thereof. In one aspect of the invention the polyether resin comprises a plurality of functional groups and is obtained by polymerisation of a mixture of alkoxylated reactive compounds having one or more functionalities and having different molecular weights.

BACKGROUND OF INVENTION

Traditionally, polystyrene-divinylbenzene (PS-DVB) has been used as a support for solid phase chemistry because of its high thermal stability, chemical inertness, and mechanical robustness. However, the limited swelling of PS-DVB supports in polar media can limit reagent accessibility and prevent chemical applications in which complete solvation of the polymer matrix is essential for reactivity.

Although increased swelling in polar solvents can be achieved by grafting polyethylene glycol (PEG) to chloromethylated PS-DVB, the resulting PEG-grafted PS-DVB supports such as TentaGel™ (Rapp Polymere GmbH; Tubingen, Germany) and ArgoGel™ (Argonault Technologies; San Carlos, Calif.) have limitations for use in aqueous solvents and for enzymatic chemistry.

Several PEG-based resins exhibit high swelling volumes in both non-polar solvents and water. These resins include, for example, polyoxyethylene-polyoxypropylene (POEPOP), SPOCC (Superior Polymer for Organic Combinatorial Chemistry, a polymer formed by cationic polymerization of a mixture of mono- and bis-oxetanylated PEG macromonomers), and polyoxyethylene-polystyrene (POEPS).

These polymers have a good biocompatibility and chemical stability but are limited in their density of functional handles (loading). These limitations origin from the fact that these polymers are made from partial alkylation of PEG chains, which results in a mixture of unsubstituted PEG, monosubstituted PEG and disubstituted PEG chains, all with the same chain length. The unsubstituted PEG's is an undesired impurity and the fact that all the partially alkylated PEG chains have the same length limits the resulting ratio between loading ad swelling. This ratio corresponds to the loading per volume (mol/l), which has been reported to be 0.05 to 0.08 in water for resins based on PEG macromonomers of 1500 g/mol, and ~0.3 in water for PEG macromonomers of 400 g/mol. [J.Rademann et al. (1999) J.Am.Chem.Soc 121: 5459-5466]. Also the ratio between mono- and di-functional macromonomers cannot be varied freely since it is controlled by the statistics in the alkylation process of these PEG based macromonomers. In addition, the monosubstituted and the di-substituted chains have to be PEG chains, which would limit the possibility for adapting the hydrophilicity of the chains and thus the swelling in a given solvent mixture.

There is a need for obtaining functional resins with an adjustable loading/swelling ratio for various applications, as well as, resins with higher loadings than the present PEG based resins, while retaining their biocompatibility and high swelling.

SUMMARY OF INVENTION

The polymer resins of the present invention exhibit several advantageous features which can be exploited in applications such as affinity chromatography, solid-phase organic chemistry, solid-phase enzymatic reactions, and on-bead screening assays.

The present invention in one aspect relates to a resin comprising a polymer matrix having a plurality of functional groups, wherein the matrix can be obtained by polymerisation of a mixture of alkoxylated reactive compounds selected from a) alkoxylated compounds having a functionality of more than one, and b) alkoxylated monofunctional reactive compounds, wherein the alkoxylated part of the alkoxylated compounds having a functionality of more than one, such as alkoxylated di- or oligofunctional alkoxylated compounds, has an average molecular weight which is different from the average molecular weight of the alkoxylated part of the alkoxylated monofunctional reactive compounds. The polymerisation optionally takes place in the presence of a chain extension monomer.

The below scheme illustrates the principle of the polymerisation. Predefined amounts of di- or oligofunctional alkoxylated reactive compounds are mixed with predefined amounts monofunctional alkoxylated reactive compounds, optionally in the presence of a chain extension monomer and the resulting mixture is polymerised under appropriate conditions.

di- and/or oligofunctional compound + monofunctional compound + chain extender (optional)

polymerisation

a resin

The ratio between the components defines important parameters like swelling and loading. It is a significant advantage that a vide variety of properties can be obtained by adjusting the ratio between as little as three components. In addition the hydrophilicity of the three components can be adjusted individually by selecting different polyethers as the alkoxylated part. This way the swelling behaviour in different solvents can be optimised for specific applications.

The chain extender is preferably a cyclic ether or a vinyl ether, but other chemical entities exhibiting similar reactivities can also be used

The the alkoxylated part of the alkoxylated di- or oligofunctional reactive compound and the alkoxylated part of the monofunctional reactive compounds have different molecular weights.

The basic structure of a mono- and a difunctional alkoxylated reactive compound according to the invention is illustrated herein below:

| Re-alkoxylated part-Re | Re-alkoxylated part -Te |
|---|---|
| difunctional compound | monofunctional compound |

wherein "Re" denotes a reactive group, and wherein "Te" denotes a terminal group different from the reactive group(s).

DETAILED DESCRIPTION OF THE INVENTION

*Definitions*

PEGn are polyethyleneglycols wherein n represents the average molecular weight of the polyethylene glycol, e.g. PEG400 represents a polyethylene glycol with the average molecular weight 400 g/mol. PPGn are polypropyleneglycols wherein n represents the average molecular weight of the polypropylene glycol, e.g. PPG400 represents a polypropylene glycol with the average molecular weight 400 g/mol. Similarly, random and block copolymers are denoted ran-(PEG-PPG)n and block-(PEG-PPG)n wherein n represents the average molecular weight of the copolymer chain, e.g. ran-(PEG-PPG)2500 represents a random copolymer of ethylene glycol and propyleneglycol units with a total average molecular weight of 2500 g/mol.

$(EO)_n$ represents n ethylene oxide units in a polymer chain, e.g. $(EO)_4$ represents 4 ethylene oxide units.

$(PO)_n$ represents n propylene oxide units in a polymer chain, e.g. $(PO)_s$ represents 5 ethylene oxide units.

*Alkoxylated reactive compounds*

In one embodiment the alkoxylated reactive compounds can be selected from ethoxylated reactive compounds and propoxylated reactive compounds, including a combination of both ethoxylated reactive compounds and propoxylated reactive compounds.

The alkoxylated reactive compounds are typically selected from alkoxylated glycidol, oxetane, ethenyl ether and 1-propenyl ether, including any combination thereof.

The alkoxylated di- or oligofunctional reactive compounds may be selected from polyethylene glycol bis(3-methyloxetane-3-methyl) ether, polyethylene glycol bis(3-ethyloxetane-3-methyl) ether, ethoxylated trimethylolpropane tris(3-methyloxetane-3-methyl) ether, ethoxylated pentaerythritol tetrakis(3-methyl-oxetane-3-methyl) ether, polyethylene glycol diglycidyl ether, and triethylene glycol divinyl ether, including any combination thereof.

Examples of alkoxylated di- or oligofunctional reactive compounds are those selected from ethers of monodisperse or polydisperse polyethyleneglycols (PEGs) having the general formula PEGn, wherein n represents the average molecular weight (g/mol) of the polyethylene glycol, such as ethers of monodisperse or polydisperse polyethyleneglycols having an average molecular weight (g/mol) in the range of from 60 to preferably less than 8000, such as polyethylene glycols in the range of from PEG100 to PEG8000, for example PEG100 to PEG400, such as PEG400 to PEG1000, for example PEG1000 to PEG2000, such as PEG2000 to PEG4000, for example PEG4000 to PEG8000.

Alternative examples of alkoxylated di- or oligofunctional reactive compounds are those selected from ethers of monodisperse or polydisperse polypropyleneglycols (PPGs) having the general formula PPGn, wherein n represents the average molecular weight (g/mol) of the polypropylene glycol, such as ethers of monodisperse or polydisperse polypropyleneglycols having an average molecular weight (g/mol) in the range of from 70 to preferably less than 8000, such as polypropylene glycols in the range of from PPG70 to PPG8000, for example PPG120 to PPG400, such as PPG400 to PPG1000, for example PPG1000 to PPG2000, such as PPG2000 to PPG4000, for example PPG4000 to PPG8000.

Still further alternative examples of alkoxylated di- or oligofunctional reactive compounds are those selected from ethers of monodisperse or polydisperse random or block co-polymers of ethyleneglycol and propyleneglycol units (PEG- PPG) having the general formula (PEG-PPG)n, wherein n represents the average molecular weight (g/mol) of the copolymer chain, such as ethers of monodisperse or polydisperse block or random co-polymers having an average molecular weight (g/mol) in the range of from 110 to preferably less than 8000, such as random polyethylene poly propylene glycols in the range of from (PEG-PPG)110 to (PEG-PPG)8000, for example (PEG-PPG)110 to (PEG-PPG) 400, such as (PEG-PPG)400 to (PEG-PPG)1000, for example (PEG-PPG)1000 to (PEG-PPG)2000, such as (PEG-PPG)2000 to (PEG-PPG)4000, for example (PEG-PPG)4000 to (PEG-PPG)8000.

In one preferred embodiment, alkoxylated compounds having a functionality of more than one are difunctional alkoxylated compounds. In another embodiment, alkoxylated compounds having a functionality of more than one are oligofunctional alkoxylated compounds having a functionality of more than 2.

It is preferred that the alkoxylated compounds having a functionality of more than one has a number of alkoxylene oxide units of at least 6 such as at least 8, e.g. at least 10.

Examples of alkoxylated difunctional reactive compounds are polydisperse PEG400 bis(3-methyloxetane-3-methyl) ether, polydisperse PEG1000 bis(3-methyloxetane-3-methyl) ether, polydisperse PEG1000 bis(3-methyloxetane-3-ethyl) ether, polydisperse PEG2000 bis(3-methyloxetane-3-methyl) ether, polydisperse PEG4000 bis(3-methyloxetane-3-methyl) ether, polydisperse PPG400 bis(3-methyloxetane-3-methyl) ether, polydisperse PPG2000 bis(3-methyloxetane-3-methyl) ether, polydisperse ran-(PEG-PPG)2000 bis(3-methyloxetane-3-methyl) ether, and polydisperse tri-block-(PEG-PPG-PEG)1900 bis(3-methyloxetane-3-methyl) ether.

The alkoxylated monofunctional reactive compounds can be selected from alkoxylated glycidols, oxetanes, ethenyl ethers, and 1-propenyl ether, including any combinations thereof. Examples include tetraethyleneglycol monoglycidyl ether and 4-hydroxybutyl vinyl ether.

In one preferred embodiment, the alkoxylated monofunctional reactive compounds are selected from the group consisting of ethoxylated oxetanes and propoxylated oxetanes, including any combination of ethoxylated oxetanes and propoxylated oxetanes.

Preferably, the ethoxylated monofunctional oxetane compounds are selected from polydisperse ethoxylated monofunctional oxetane compounds having from 2 to 30 ethylene oxide units, such as $(EO)_{2-30}$ oxetane, such as $(EO)_3$ oxetane, $(EO)_6$ oxetane, $(EO)_9$ oxetane, $(EO)_{12}$ oxetane and $(EO)_{15}$ oxetane, including any combination thereof.

Likewise, the propoxylated monofunctional oxetane compounds can preferably be selected from polydisperse propoxylated monofunctional oxetane compounds having from 2 to 30 propylene oxide units, such as $(PO)_{2-30}$ oxetane, such as $(PO)_3$ oxetane, $(PO)_6$ oxetane, $(PO)_9$ oxetane, $(PO)_{12}$ oxetane or $(PO)_{15}$ oxetane.

Preferred oxetanes are 3-methyloxetane-3-methanol and 3-ethyloxetane-3-methanol.

In one embodiment, the polydisperse alkoxylated monofunctional reactive compounds can comprise or consist of compounds having the formulas illustrated herein below:

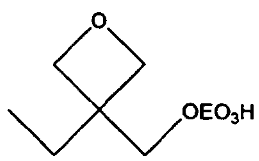

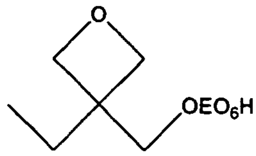

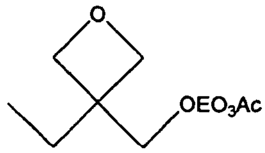

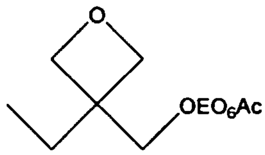

Such 3-ethyloxetanes are believed to provide advantageous properties with respect to a slightly lower reactivity than the corresponding 3-methyloxetanes.

*Terminal groups*

The terminal groups of the monofunctional reactive compounds can be any suitable terminal group, including groups such as e.g. hydroxyl, ester, ether, amide, azido, and leaving groups, including any combination thereof.

The terminal group of the monofunctional reactive compound can also be an ester, such as formate, acetate, propanoate, butanoate, i-butanoate, trifluoroacetate, benzoate, methylbenzoate, or nitrobenzoate; or the terminal group of the monofunctional reactive compound can be an ether, such as e.g. methyl, ethyl, propyl, butyl, hexyl, dodecyl, allyl, butenyl, benzyl, substituted benzyl such as methylbenzyl or nitrobenyl; or *t*-butyldimethylsilyl; or the terminal group of the monofunctional reactive compound can be a carboxamido, such as formamido, acetamido, propanamido, trifluoroacetamido, benzamido, substituted benzamido such as methylbenzamido or nitrobenzamido; phthalimido, succinimido, sulfonamido such as p-toluenesulfonamido or trifluorosulfonamido; or the terminal group of the monofunctional reactive compound can be a leaving group, such as chloro, bromo, iodo, or sulphonate such as methanesulfonate, p-toluenesulfonate, or trifluoromethanesulfonate.

*Chain extension monomer*

In one embodiment, the polymerisation of the mixture of alkoxylated reactive compounds takes place in the presence of a chain extension monomer. The chain extension monomer may, e.g., be a cyclic ether or a vinyl ether.

When the chain extension monomer comprises or consists of a cyclic ether, examples include, but is not limited to epoxides, oxetanes, and tetrahydrofuranes.

The epoxide can be selected from ethylene oxide, propylene oxide, 1,2-butene oxide, 2,3-butene oxide, cyclohexene oxide, limonene oxide and styrene oxide, including any combination thereof.

In some embodiments, the epoxide can be a glycidol, or a glycidyl ether, such as allyl glycidyl ether, or phenyl glycidyl ether. The epoxide can also comprise or consist of a carbohydrate epoxide.

The oxetane can e.g. be 1,3-trimethylene oxide, 3,3-dimethyloxetane, 3-(bromomethyl)-3-methyl oxetane, or 3-ethyl-3-(hydroxymethyl) oxetane.

The tetrahydrofurane can e.g. be 1,4-butylene oxide.

*Loading capacities and swelling volumes*

The loading of functional groups is preferably in the range of from 0.01 to 5 mmol/g, such as in the range of

from 0.5 to 3 mmol/g, for example in the range of from 1.0 to 2 mmol/g. The loading values depend among other things on the ratio between the alkoxylated monofunctional reactive compounds and the alkoxylated di- or oligofunctional reactive compounds. Thus, high loading values are obtained when the polymerisation mixture contains high relative amounts of monofunctional reactive compounds.

The swelling in an aqueous liquid, including water, can be in the range of 1 mL/g to 30 mL/g, such as from 3 mL/g to 20 mL/g, for example from 3 mL/g to 15 mL/g, such as from 5 mL/g to 10 mL/g.

In general high loading/swelling ratios or loading per volume resin swelled in aqueous liquid, including water, can be in the range of 0.1 mmol/mL to 20 mmol/mL, such as from 0.2 mmol/mL to 10 mmol/mL, for example from 0.3 mmol/mL to 5 mmol/mL.

The amount of PPG relative to the amount of PEG in the resins has a strong impact on the swelling behaviour in water and organic solvents. High PEG contents result in resins with high water swelling and low swelling in non-polar organic solvents. Inversely, high PPG contents give higher swelling in organic solvents than in water.

Thus, the swelling behaviour can be adapted to give a desired solvent dependency of swelling. The PPG/PEG ratio can be controlled by mixing PPG and PEG containing reactive compounds or by using copolymers of PPG and PEG or a combination of these.

*Composition of beaded and cross-linked polymer matrices*

There is also provided a composition comprising a plurality of beaded, cross-linked polymer matrices according to the invention. The average bead diameter is preferably in the range of 0.01 μm to 1500 μm, such as from 10 to 1000 μm, for example from 100 to 500 μm.

*Methods for generating polymer matrices according to the invention*

There is provided a method for generating a cross-linked and optionally beaded resin according to the invention, or a composition according to the invention as described herein above and in the examples.

The method comprises the steps of

providing a mixture of alkoxylated reactive compounds selected from a) alkoxylated compounds having a functionality of more than one, and b) alkoxylated monofunctional reactive compounds, wherein the alkoxylated part of the alkoxylated compounds having a functionality of more than one has an average molecular weight which is different from the average molecular weight of the alkoxylated part of the alkoxylated monofunctional reactive compounds, optionally in the presence of a chain extender,

polymerizing the mixture of alkoxylated reactive compounds,

wherein said polymerization optionally proceeds under beading conditions and leads to the formation of a polymer resin according to the present invention, preferably a beaded polymer resin.

The method can be performed as a batch or continuous process. A chain extension monomer can be provided, as can an initiator or catalyst, as well as a radiation or thermally curing component.

The mixture of alkoxylated reactive compounds can be mixed with the initiator in specific ratios, preferably in a solvent and under beading conditions. Preferably, the mixture of alkoxylated reactive compounds is mixed with a solvent to form a dispersed phase and subsequently poured into a continuous phase with stirring. A surface active agent can also be added to the reactive phase or to the continuous phase, or to both.

The ratio of mole equivalents of di- or oligofunctional reactive compounds to monofunctional reactive compounds can be from 1 : 0.1 to 20, such as 1 : 1-15, for example 1 : 2-12.

The ratio of mole equivalents of di- or oligofunctional reactive compounds to monofunctional reactive compounds to chain extension monomer can be in the range of 1 : 0.1 - 20 : 0-10; such as 1 : 1-15 : 0-5; for example 1 : 2-12 : 0-1.

The reaction can be run neat or in the presence of a solvent, such as a halogenated solvent, for example methylene chloride, chloroform, carbon tetrachloride, or an aromatic solvent for example toluene, xylene, chlorobenzene or nitrobenzene, or an ether solvent for example tetrahydrofurane, dioxane, dimethoxyethane, diethyleneglycol dimethyl ether, triethylene glycol dimethyl ether, or tetraethyleneglycol dimethyl ether; nitrile for example acetonitrile or propionitrile, and an ester such as methyl formate, dimethyl carbonate, or ethylene carbonate.

The concentration of reactive compounds in the reaction solution is typically from 5 to 100%, such as from 10 to 70%, for example from 15 to 50%.

The reaction temperature can be anything suitable, typically it is in the range of from -20°C to 100°C, such as from 0°C to 70°C, for example from 10°C to 40°C.

The catalyst for the polymerisation can be a Lewis acid, a Bronsted acid, a cationic salt, or precursors thereof. The Lewis acid can be e.g. zinc trifluoromethanesulfonate, aluminium chloride, boron trifluoride ethyl etherate or boron trifluoride-tetrahydrofurane complex. The Brønsted acid or a precursor thereof can be e.g. trifluoromethanesulfonic acid, trimethylsilyl trifluoromethanesulfonate, p-toluenesulfonic acid, 2,4,6-triisopropylbenzenesulfonic acid, pentafluorobenzenesulfonic acid, perchloric acid, and tetrafluoroboric acid. The cationic salt can be e.g. a sulfonium salt, an iodonium salt, or an ammonium salt of hexafluorophosphoric acid, hexafluoroantomony acid, and tetrakis(pentafluoropheny)boric acid. The sulfonium salt can be e.g. trifenylsulfonium or S-benzyltetrathiophenium, such as S-(p-methoxybenzyl)-tetrahydrothiophenium or S-(p-nitrobenzyl)tetrathiophenium. The iodonium salt can comprise or consist of diphenyliodonium. The ammonium salt can comprise or consist of *N*-benzyl-*N,N*-dimethylanilinium or pyridinium.

When the polymer matrix is in a beaded form, the beaded polymer matrix can be obtained by inverse suspension or inverse emulsion polymerisation. The beading process can utilise a combination of liquid phases, a reactive phase and a continuous phase, and optionally also a surface active agent. The reactants are preferably dissolved in the reactive phase and added to the continuous phase with stirring.

The catalyst and the surfactant, when present, can be added either to the reactive phase, before being added to the continuous phase, or to the continuous phase before or after the reactive phase has been added.

The reactive phase can be a polar solvent, such as an ether solvent, for example tetrahydrofurane, dioxolane, dioxane, dimethoxyethane, diethyleneglycol dimethyl ether, triethylene glycol dimethyl ether, or tetraethyleneglycol dimethyl ether. The reactive phase can also be a polar solvent such as a nitrile, for example acetonitrile or propionitrile. The reactive phase can also be a polar solvent such as a ketone, for example acetone, including any combination thereof. The reactive phase can also be a polar solvent such as an ester, for example methyl formate, methyl acetate, ethyl formate, dimethyl carbonate, or ethylene carbonate, including any combination thereof.

The continuous phase can be a petroleum fraction, an aliphatic oil, a silicon oil, a natural fat or triglyceride, an aromatic solvent, such as toluene or xylene, a halogenated solvent such as methylene chloride, chloroform, carbon tetrachloride, dichloroethane, trichloroethylene, chlorobenzene, and a fluorinated solvent, including any combination thereof.

The ratio of reactive phase to non-miscible liquid is typically from 2:1 to 1:100, for example from 4:5 to 1:75, such as from 1:2 to 1:30.

The surface active agent can be selected from the group consisting of neutral surface active agents, such as ethoxylated aliphatic alcohols, ethoxylated alkylphenols, alkylphenols, carbohydrate derived esters, e.g., sorbitan laurate; amphiphilic polymers such as copolymers of polyethylene glycol methacrylate and lauryl acrylate or trialkylsilylalkyl methacrylate, or copolymers of ethylene oxide and propylene oxide, or homopolymers such as polyvinyl acetate, or completely or partially hydrolysed polyvinyl acetate, or combinations thereof.

The stirring frequency can be anything suitable, typically from 1 to 2000 rpm, such as 50 to 1000 rpm, or 100 to 500 rpm.

*Uses of the polymer resins according to the invention*

A number of uses of a resin or composition according to the present invention are also provided, including:

Use of the resin according to the invention or the composition according to the invention for scavenging undesirable chemical compounds, preferably carbonyl and/or sulfonyl compounds, from a composition comprising a mixture of chemical entities.

Use of the resin according to the invention or the composition according to the invention as support for immobilised reagents such as oxidizing agents, or alkylating agents, or complexing agents, such as phosphines.

Use of the resin according to the invention or the composition according to the invention for scavenging undesirable chemical compounds, preferably carbonyl and/or sulfonyl compounds, from a composition comprising a mixture of chemical entities. The undesirable chemical compounds can be generated in any type of reactions, including organometallic reactions. The carbonyl or sulfonyl compounds are preferably selected from the group of compounds consisting of organic acids, acid chlorides, sulfonyl chlorides, ketones, aldehydes, and derivatives thereof.

Use of the resin according to the invention or the composition according to the invention for scavenging off-flavour related carbonyl compounds from a fermented product, or a drinkable composition comprising a fermented product. The carbonyl compounds can be dicarbonyl compounds, and the fermented product can be beer or cider or wine.

Use of the resin according to the invention or the composition according to the invention as support for the synthesis of an organic molecule.

Use of the resin according to the invention or the composition according to the invention as supports when generating a combinatorial chemistry library.

Use of the resin according to the invention or the composition according to the invention as supports when generating a library of chemical entities.

Use of the resin according to the invention or the composition according to the invention as a support for the synthesis of a drug molecule, a peptide, a protein, DNA, or RNA.

Use of the resin according to the invention or the composition according to the invention as support for solid phase enzyme reactions.

Use of the resin according to the invention or the composition according to the invention for protein immobilisation of biomolecules, such as proteins, enzymes, or other biochemically active entities.

Use of the resin according to the invention or the composition according to the invention for chromatographic separation or purification of desirable target compounds including affinity purification.

EXAMPLES

*Example 1*

The beaded polymer resin was prepared by an inverse suspension polymerization method. To a flask containing 15 mL of acetonitrile, 10.0 g of bis(3-methyloxetane-3-methyloxetane-3-methyl) ether polyethylene glycol ($M_n$PEG =400 g/mol) having an average molecular weight of ~570 g/mol and 20.0 g acetylated trimethylolpropane oxetane ethoxylate (composed of three ethylene oxide units in average) (MW= 290 g/mol) were added. Following this, 0.60 g of a surfactant was added and dissolved in the reaction mixture. The reaction mixture (dispersed phase) was cooled to below -10°C. The initiator, 1.87 g boron trifluoride ethyl etherate, was added drop wise under controlled temperature, not exceeding -10°C. After the addition, the solution was added to the continuous phase, consisting of 600 mL of paraffin oil in a three-necked baffled flask, equipped with a mechanical stirrer, forming a suspension of beads. The chemical synthesis, i.e. network formation, was performed at 30°C for 20 h. After the polymerization, the resulting beads were filtrated from the oil phase. The beads were then sequentially washed with dichloromethane, tetrahydrofurane, methanol and water to remove rest products and oil. The beads were treated with 4 M HCl for 2 h at 60°C and 4 M NaOH for 2 h at 60°C, followed by washing with dichloromethane, methanol and water. The degree of hydroxyl functionality (hydroxyl capacity, loading) was analyzed to 2.5 mol/kg. The swelling performance in water was determined to 2.2 mL/g. Thus, the loading per volume was determined to 1.1 mmol/mL.

*Example 2*

The beaded polymer resin was prepared by an inverse suspension polymerization method. To a flask containing 15 mL of acetonitrile, 19.8 g of bis(3-methyloxetane-3-methyloxetane-3-methyl) ether polyethylene glycol ($M_n$PEG =400 g/mol) having an average molecular weight of ~570 g/mol and 10.2 g acetylated trimethylolpropane oxetane ethoxylate (composed of three ethylene oxide units in average) (MW= 290 g/mol) were added. Following this, 0.60 g of a surfactant was added and dissolved in the reaction mixture. The reaction mixture (dispersed phase) was cooled to below -10°C. The initiator, 1.89 g boron trifluoride ethyl etherate, was added drop wise under controlled temperature, not exceeding -10°C. After the addition, the solution was added to the continuous phase, consisting of 600 mL of paraffin oil in a three-necked baffled flask, equipped with a mechanical stirrer, forming a suspension of beads. The chemical synthesis, i.e. network formation, was performed at 30°C for 20 h. After the polymerization, the resulting beads were filtrated from the oil phase. The beads were then sequentially washed with dichloromethane, tetrahydrofurane, methanol and water to remove rest products and oil. The beads were treated with 4 M HCl for 2 h at 60°C and 4 M NaOH for 2 h at 60°C, followed by washing with dichloromethane, methanol and water. The degree of hydroxyl functionality (hydroxyl capacity, loading) was analyzed to 1.6 mol/kg. The swelling performance in water was determined to 2.0 mL/g. Thus, the loading per volume was determined to 0.8 mmol/mL.

*Example 3*

The beaded polymer resin was prepared by an inverse suspension polymerization method. To a flask containing 15 mL of acetonitrile, 19.0 g of bis(3-ethyloxetane-3-methyloxetane-3-methyl) ether polyethylene glycol ($M_n$PEG=500 g/mol) having an average molecular weight of ~742 g/mol and 11.0 g acetylated trimethylolpropane oxetane ethoxylate (composed of three ethylene oxide units in average) (MW= 290 g/mol) were added. Following this, 0.60 g of a surfactant was added and dissolved in the reaction mixture. The reaction mixture (dispersed phase) was cooled to below -10°C.

The initiator, 3.19 g boron trifluoride ethyl etherate, was added drop wise under controlled temperature, not exceeding -10°C. After the addition, the solution was added to the continuous phase, consisting of 600 mL of paraffin oil in a three-necked baffled flask, equipped with a mechanical stirrer, forming a suspension of beads. The chemical synthesis, i.e. network formation, was performed at 30°C for 20 h. After the polymerization, the resulting beads were filtrated from the oil phase. The beads were then sequentially washed with dichloromethane, tetrahydrofurane, methanol and water to remove rest products and oil. The beads were treated with 4 M HCl for 2 h at 60°C and 4 M NaOH for 2 h at 60°C, followed by washing with dichloromethane, methanol and water. The degree of hydroxyl functionality (hydroxyl capacity, loading) was analyzed to 2.0 mol/kg. The swelling performance in water was determined to 2.0 mL/g. Thus, the loading per volume was determined to 1.0 mmol/mL.

*Example 4*

The beaded polymer resin was prepared by an inverse suspension polymerization method. To a flask containing, 1.31 g of melted bis(3-methyloxetane-3-methyloxetane-3-methyl) ether polyethylene glycol ($M_n$PEG=2000 g/mol) having an average molecular weight of ~2205 g/mol, 1.33 mL of tetraethyleneglycol dimethyl ether was added. Keeping the temperature at 28-30°C, 0.69 g of acetylated trimethylolpropane oxetane ethoxylate (composed of three ethylene oxide units in average) (MW= 290 g/mol) was added. The initiator, 0.101 g boron trifluoride ethyl etherate, was added drop wise under a controlled temperature interval of 28-30°C. After the addition, the solution was added to a three-necked baffled flask equipped with a mechanical stirrer, containing the continuous phase that was consisting of 40 mL of paraffin oil and 0.010 g of a surfactant. The chemical synthesis, i.e. network formation, was performed at 40°C for 20 h. After the polymerization, the resulting beads were filtrated from the oil phase. The beads were then sequentially washed with dichloromethane, tetrahydrofurane, methanol and water to remove rest products and oil. The beads were treated with 4 M HCl for 2 h at 60°C and 4 M NaOH for 2 h at 60°C, followed by washing with dichloromethane, methanol and water. The degree of hydroxyl functionality (hydroxyl capacity, loading) was analyzed to 1.6 mol/kg. The swelling performance in water was determined to 7.3 mL/g. Thus, the loading per volume was determined to 0.2 mmol/mL.

*Example 5*

The beaded polymer resin was prepared by an inverse suspension polymerization method. To a flask containing 2.5 ml of dimethyl carbonate, 2.56 g melted bis($\alpha$,$\omega$-3-methyloxetane-3-methyl) ether polyethylene glycol ($M_n$PEG =2000 g/mol) having an average molecular weight of ~2205 g/mol and 2.44 g acetylated trimethylolpropane oxetane ethoxylate (composed of 12 ethylene oxide units in average) (MW= 686 g/mol) were added. The reaction mixture (dispersed phase) was cooled to 22°C. The initiator, 0.073 g boron trifluoride ethyl etherate, was added to a beaker containing a solution of 0.026 g of trimethylol propane and 0.5 ml dimethyl carbonate. The initiator solution was added drop wise to the dispersed phase under controlled temperature, not exceeding 25°C. After the addition, the solution was added to a three-necked baffled flask equipped with a mechanical stirrer, containing the continuous phase that was consisting of 100 ml of paraffin oil and 0.100 g of a dissolved surfactant. The chemical synthesis, i.e. network formation, was performed at 40°C overnight. After the polymerization, the resulting beads were filtrated from the oil phase. The beads were then sequentially washed with dichloromethane, tetrahydrofurane, methanol and water to remove rest products and oil. The beads were treated with 4 M HCl for 2 h at 60°C and 4 M NaOH for 2 h at 60°C, followed by neutralisation and washing with water. The degree of hydroxyl functionality (loading) was analysed to 0.98 mol/kg. The swelling performance in water was determined to 6.3 ml/g. Thus, the loading per volume was determined to 0.156 mmol/ml.

*Example 6*

The beaded polymer resin was prepared by an inverse suspension polymerization method. To a flask containing 50 ml of dimethyl carbonate, 58.5 g of bis($\alpha$,$\omega$-3-methyloxetane-3-methyl) ether polyethylene glycol/polypropylene glycol ($M_n$PEG/PPG =1060 g/mol, composed of three polypropylene oxide units in average in a block copolymer structure containing 87 percent PEG, PEG/PPG/PEG, supplied by Ineos - product ID: TB12087) having an average molecular weight of ~1240 g/mol and 41.5 g acetylated trimethylolpropane oxetane ethoxylate (composed of three ethylene oxide units in average) (MW= 290 g/mol) were added. The reaction mixture (dispersed phase) was cooled to 16°C. The initiator, 2.952 g boron trifluoride ethyl etherate, was added to a beaker containing a solution of 1.065 g of trimethylol propane and 10 ml dimethyl carbonate. The initiator solution was added drop wise to the dispersed phase under controlled temperature, not exceeding 25°C. After the addition, the solution was added to a three-necked baffled flask equipped with a mechanical stirrer, containing the continuous phase that was consisting of 500 ml of paraffin oil and 0.75 g of a dissolved surfactant. The chemical synthesis, i.e. network formation, was performed at 40°C for 2 h. After the polymerization, the resulting beads were filtrated from the oil phase. The beads were then sequentially washed with dichloromethane, tetrahydrofurane, methanol and water to remove rest products and oil. The beads were treated with 4 M

HCl for 2 h at 60°C and 4 M NaOH for 2 h at 60°C, followed by neutralisation and washing with water. The degree of hydroxyl functionality (loading) was analysed to 1.66 mol/kg. The swelling performance in water was determined to 3.0 ml/g. Thus, the loading per volume was determined to 0.55 mmol/ml.

*Example 7 - Polymerization of phtalimide resin*

The beaded polymer resin was prepared by an inverse suspension polymerization method. To a flask containing 18 ml of dimethyl carbonate, 15.6 g of melted bis($\alpha$,$\omega$-3-methyloxetane-3-methyl) ether polyethylene glycol ($M_n$PEG=2000 g/mol) having an average molecular weight of ~2205 g/mol. Keeping the temperature at 28-30°C, 14.5 g phtalimide end capped trimethylolpropane oxetane ethoxylate (composed of nine ethylene oxide units in average) (MW= 627 g/mol) were added. The reaction mixture (dispersed phase) was cooled to 20°C. The initiator, 0.504 g boron trifluoride ethyl etherate, was added to a beaker containing a solution of 0.161 g of trimethylol propane and 2 ml dimethyl carbonate. The initiator solution was added drop wise to the dispersed phase under controlled temperature, not exceeding 25°C. After the addition, the solution was added to a three-necked baffled flask equipped with a mechanical stirrer, containing the continuous phase that was consisting of 600 ml of paraffin oil and 0.153 g of a dissolved surfactant. The chemical synthesis, i.e. network formation, was performed at 40°C for 20 h. After the polymerization, the resulting beads were filtrated from the oil phase. The beads were then sequentially washed with dichloromethane, tetrahydrofurane, methanol and water to remove rest products and oil.

*Example 8 - Hydrolysis of phtalimide resin*

The resin was washed in a glass filter funnel with 150 ml methanol followed by the washing with 150 ml butanol. After draining off the solvent, another 50 ml of butanol was added to the beaker and left at room temperature for 2 h. The butanol was drained off and the resin was placed in a round bottom flask. To the resin, 11 ml of ethylene diamine was added followed by the addition of 30 ml of butanol. The mixture was stirred and heated to 90°C for 15 h under inert atmosphere. The resultant product was washed with water followed by 0.5 M HCl until the pH was approx. 1-2. The resin was then drain from solvent and covered with 2 M HCl. The mixture was stirred and heated to 90°C for 2 h. Finally, the resin was washed thoroughly with 1 M NaOH followed by water. The density of amine functionalities (loading) was analysed to 0.43 mol/kg. The swelling performance in water was determined to 7.8 ml/g. Thus, the loading per volume was determined to 0.055 mmol/ml.

## Claims

1. A resin comprising a polymer matrix comprising a plurality of functional groups, wherein said polymer matrix is obtainable by polymerisation of a mixture of alkoxylated reactive compounds selected from a) alkoxylated compounds having a functionality of more than one, and b) alkoxylated monofunctional reactive compounds, wherein the alkoxylated part of the alkoxylated compounds having a functionality of more than one has an average molecular weight which is different from the average molecular weight of the alkoxylated part of the alkoxylated monofunctional reactive compounds.

2. The resin according to claim 1, wherein the alkoxylated compounds having a functionality of more than one are alkoxylated di- or oligofunctional reactive compounds which are selected from polyethylene glycol bis(3-methyloxetane-3-methyl) ether, polyethylene glycol bis(3-ethyloxetane-3-methyl) ether, ethoxylated trimethylolpropane tris(3-methyloxetane-3-methyl) ether, ethoxylated pentaerythritol tetrakis(3-methyl-oxetane-3-methyl) ether, polyethylene glycol diglycidyl ether, and triethylene glycol divinyl ether, including any combination thereof.

3. The resin according to any one of the claims 1-2, wherein the alkoxylated compounds having a functionality of more than one are alkoxylated di- or oligofunctional reactive compounds which are selected from ethers of monodisperse or polydisperse polyethyleneglycols (PEGs) having the general formula PEGn, wherein n represents the average molecular weight (g/mol) of the polyethylene glycol.

4. The resin according to any one of the claims 1-2, wherein the alkoxylated compounds having a functionality of more than one are alkoxylated di- or oligofunctional reactive compounds which are selected from ethers of monodisperse or polydisperse polypropyleneglycols (PPGs) having the general formula PPGn, wherein n represents the average molecular weight (g/mol) of the polypropylene glycol.

5. The resin according to any one of the claims 1-2, wherein the alkoxylated compounds having a functionality of more

than one are alkoxylated di- or oligofunctional reactive compounds which are selected from ethers of monodisperse or polydisperse random or block co-polymers of ethyleneglycol and propyleneglycol units (PEG- PPG) having the general formula (PEG-PPG)n, wherein n represents the average molecular weight (g/mol) of the copolymer chain.

**6.** The resin according to any one of the claims 3-5 wherein the alkoxylated difunctional reactive compounds are selected from the group consisting of polydisperse PEG400 bis(3-methyloxetane-3-methyl) ether, polydisperse PEG1000 bis(3-methyloxetane-3-methyl) ether, polydisperse PEG1500 bis(3-methyloxetane-3-methyl) ether, polydisperse PEG2000 bis(3-methyloxetane-3-methyl) ether, polydisperse PEG3000 bis(3-methyloxetane-3-methyl) ether, polydisperse PEG4000 bis(3-methyloxetane-3-methyl) ether, polydisperse PPG400 bis(3-methyloxetane-3-methyl) ether, polydisperse PPG2000 bis(3-methyloxetane-3-methyl) ether, polydisperse ran-(PEG-PPG)2500 bis (3-methyloxetane-3-methyl) ether, and polydisperse tri block-(PEG-PPG-PEG)1900 bis(3-methyloxetane-3-methyl) ether, including any combinations thereof.

**7.** The resin according to any one of the claims 1 to 6, wherein the alkoxylated monofunctional reactive compounds are selected from tetraethyleneglycol monoglycidyl ether and 4-hydroxybutyl vinyl ether.

**8.** The resin according to any one of the claims 1 to 6, wherein the alkoxylated monofunctional reactive compounds are selected from the group consisting of ethoxylated oxetanes and propoxylated oxetanes, including any combination of ethoxylated oxetanes and propoxylated oxetanes.

**9.** The resin according to claim 8, wherein the ethoxylated monofunctional oxetane compounds are selected from polydisperse ethoxylated monofunctional oxetane compounds having from 2 to 30 ethylene oxide units, such as $(EO)_{2-30}$ oxetane, such as $(EO)_3$ oxetane, $(EO)_6$ oxetane, $(EO)_9$ oxetane, $(EO)_{12}$ oxetane or $(EO)_{15}$ oxetane, including any combination thereof.

**10.** The resin according to claim 8, wherein the propoxylated monofunctional oxetane compounds are selected from from polydisperse propoxylated monofunctional oxetane compounds having from 2 to 30 propylene oxide units, such as $(PO)_{2-30}$ oxetane, such as $(PO)_3$ oxetane, $(PO)_6$ oxetane, $(PO)_9$ oxetane, $(PO)_{12}$ oxetane or $(PO)_{15}$ oxetane.

**11.** The resin according to any one of the claims 8-10, wherein the oxetane is selected from 3-methyloxetane-3-methanol and 3-ethyloxetane-3-methanol, including a combination of both.

**12.** The resin according to any one of the claims 1-11, wherein the alkoxylated monofunctional reactive compound comprises or consists of polydisperse

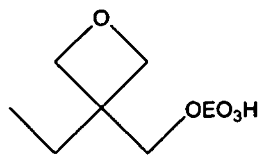

**13.** The resin according to any one of the claims 1-11, wherein the alkoxylated monofunctional reactive compound comprises or consists of polydisperse

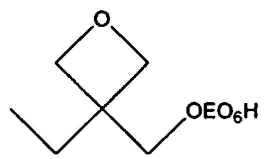

**14.** The resin according to any one of the claims 1-11, wherein the alkoxylated monofunctional reactive compound comprises or consists of polydisperse

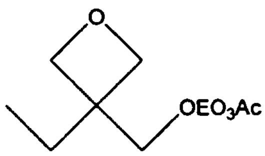

**15.** The resin according to any one of the claims 1-11, wherein the alkoxylated monofunctional reactive compound comprises or consists of polydisperse

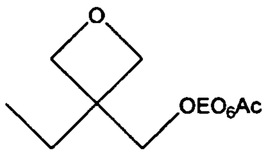

**16.** The resin according to any one of the claims 1 to 15, wherein the loading of functional groups is in the range of 0.5 to 3 mmol/g.

**17.** The resin according to any one of the the claims 1 to 16, wherein the swelling in an aqueous liquid, including water, is in the range of 2 mL/g to 20 mL/g.

**18.** A composition comprising a plurality of beaded, cross-linked polymer matrices according to any one of the claims 1 to 17, wherein the average bead diameter is in the range of 0.01 μm to 1500 μm.

**19.** A method for generating a cross-linked and optionally beaded resin according to any one of the claims 1 to 17 or the composition according to claim 18, said method comprising the steps of:

a) providing a mixture of alkoxylated reactive compounds selected from a) alkoxylated compounds having a functionality of more than one, and b) alkoxylated monofunctional reactive compounds, wherein the alkoxylated part of the alkoxylated compounds having a functionality of more than one has an average molecular weight which is different from the average molecular weight of the alkoxylated part of the alkoxylated monofunctional reactive compounds,
b) polymerizing the mixture of alkoxylated reactive compounds, and
c) obtaining a cross-linked and optionally beaded resin according to any one of the claims 1 to 17 or the composition according to claim 18.

**20.** The polymerisation process according to claim 19, wherein mixture of alkoxylated reactive compounds are mixed with an initiator in specific ratios, optionally in a solvent and under beading conditions.

**21.** The polymerisation process according to claim 20, wherein the mixture of alkoxylated reactive compounds is mixed with a solvent to form a dispersed phase and subsequently poured into a continuous phase with stirring.

**22.** The polymerisation process according to any one of the claims 19 to 21, wherein the polymer matrix is in a beaded form and obtained by inverse suspension or inverse emulsion polymerisation.

## Patentansprüche

**1.** Harz, das eine Polymermatrix aufweist, die eine Vielzahl funktioneller Gruppen enthält, wobei die Polymermatrix erhältlich ist durch Polymerisation eines Gemisches von alkoxylierten reaktiven Verbindungen, die ausgewählt sind unter

a) alkoxylierten Verbindungen mit einer Funktionalität von mehr als eins und
b) alkoxylierten monofunktionellen reaktiven Verbindungen, wobei der alkoxylierte Teil der alkoxylierten Verbindungen mit einer Funktionalität von mehr als eins ein mittleres Molekulargewicht aufweist, das von dem mittleren Molekulargewicht des alkoxylierten Teils der alkoxylierten monofunktionellen reaktiven Verbindungen

verschieden ist.

2. Harz nach Anspruch 1, bei dem die alkoxylierten Verbindungen mit einer Funktionalität von mehr als eins alkoxylierte bifunktionelle oder oligofunktionelle reaktive Verbindungen sind, die ausgewählt sind unter Polyethylenglycol-bis(3-methyloxetan-3-methyl)-ether, Polyethylenglycol-bis(3-ethyloxetan-3-methyl)-ether, ethoxyliertem Trimethylolpropan-tris(3-methyloxetan-3-methyl)-ether, ethoxyliertem Pentaerythrit-tetrakis(3-methyl-oxetan-3-methyl)-ether, Polyethylenglycol-diglycidylether und Triethylenglycol-divinylether sowie beliebigen Kombinationen dieser Verbindungen.

3. Harz nach einem der Ansprüche 1-2, bei dem die alkoxylierten Verbindungen mit einer Funktionalität von mehr als eins alkoxylierte bifunktionelle oder oligofunktionelle reaktive Verbindungen sind, die ausgewählt sind unter Ethern von monodispersen oder polydispersen Polyethylenglycolen (PEGs) der allgemeinen Formel PEGn, worin n das mittlere Molekulargewicht (g/mol) des Polyethylenglycols bedeutet.

4. Harz nach einem der Ansprüche 1-2, bei dem die alkoxylierten Verbindungen mit einer Funktionalität von mehr als eins alkoxylierte bifunktionelle oder oligofunktionelle reaktive Verbindungen sind, die ausgewählt sind unter Ethern von monodispersen oder polydispersen Polypropylenglycolen (PPGs) der allgemeinen Formel PPGn, worin n das mittlere Molekulargewicht (g/mol) des Polypropylenglycols bedeutet.

5. Harz nach einem der Ansprüche 1-2, bei dem die alkoxylierten Verbindungen mit einer Funktionalität von mehr als eins alkoxylierte bifunktionelle oder oligofunktionelle reaktive Verbindungen sind, die ausgewählt sind unter Ethern von monodispersen oder polydispersen statistischen Copolymeren oder Blockcopolymeren von Ethylenglycol- und Propylenglycol-Einheiten (PEG-PPG) der allgemeinen Formel (PEG-PPG)n, worin n das mittlere Molekulargewicht (g/mol) der Copolymerkette bedeutet.

6. Harz nach einem der Ansprüche 3 bis 5, bei dem die alkoxylierten bifunktionellen reaktiven Verbindungen aus der Gruppe ausgewählt sind, die besteht aus polydispersem PEG400-bis(3-methyloxetan-3-methyl)-ether, polydispersem PEG1000-bis(3-methyloxetan-3-methyl)-ether, polydispersem PEG1500-bis(3-methyloxetan-3-methyl)-ether, polydispersem PEG2000-bis(3-methyloxetan-3-methyl)-ether, polydispersem PEG3000-bis(3-methyloxetan-3-methyl)-ether, polydispersem PEG4000-bis(3-methyloxetan-3-methyl)-ether, polydispersem PPG400-bis(3-methyloxetan-3-methyl)-ether, polydispersem PPG2000-bis(3-methyloxetan-3-methyl)-ether, polydispersem statistischem (PEG-PPG)2500-bis(3-methyloxetan-3-methyl)-ether und polydispersem Triblockcopolymer-(PEG-PPG-PEG) 1900-bis(3-methyloxetan-3-methyl)-ether sowie beliebigen Kombinationen dieser Verbindungen.

7. Harz nach einem der Ansprüche 1 bis 6, bei dem die alkoxylierten monofunktionellen reaktiven Verbindungen unter Tetraethylenglycol-monoglycidylether und 4-Hydroxybutylvinylether ausgewählt sind.

8. Harz nach einem der Ansprüche 1 bis 6, bei dem die alkoxylierten monofunktionellen reaktiven Verbindungen aus der Gruppe ausgewählt sind, die besteht aus ethoxylierten Oxetanen und propoxylierten Oxetanen sowie beliebigen Kombinationen ethoxylierter Oxetane und propoxylierter Oxetane.

9. Harz nach Anspruch 8, bei dem die ethoxylierten monofunktionellen Oxetanverbindungen ausgewählt sind unter polydispersen ethoxylierten monofunktionellen Oxetanverbindungen mit 2 bis 30 Ethylenoxid-Einheiten, wie etwa $(EO)_{2-30}$-Oxetan, zum Beispiel $(EO)_3$-Oxetan, $(EO)_6$-Oxetan, $(EO)_9$-Oxetan, $(EO)_{12}$-Oxetan oder $(EO)_{15}$-Oxetan, sowie beliebigen Kombinationen dieser Verbindungen.

10. Harz nach Anspruch 8, bei dem propoxylierten monofunktionellen Oxetanverbindungen ausgewählt sind unter polydispersen propoxylierten monofunktionellen Oxetanverbindungen mit 2 bis 30 Propylenoxid-Einheiten, wie etwa $(PO)_{2-30}$-Oxetan, zum Beispiel $(PO)_3$-Oxetan, $(PO)_6$-Oxetan, $(PO)_9$-Oxetan, $(PO)_{12}$-Oxetan oder $(PO)_{15}$-Oxetan.

11. Harz nach einem der Ansprüche 8-10, bei dem das Oxetan ausgewählt ist unter 3-Methyloxetan-3-methanol und 3-Ethyloxetan-3-methanol sowie einer Kombination der beiden Verbindungen.

12. Harz nach einem der Ansprüche 1-11, bei dem die alkoxylierte monofunktionelle reaktive Verbindung polydisperses

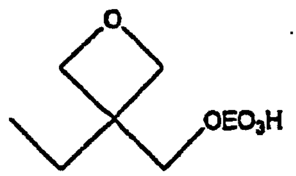

enthält oder daraus besteht.

**13.** Harz nach einem der Ansprüche 1-11, bei dem die alkoxylierte monofunktionelle reaktive Verbindung polydisperses

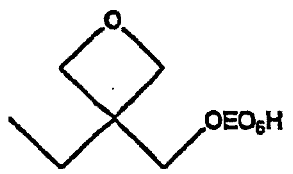

enthält oder daraus besteht.

**14.** Harz nach einem der Ansprüche 1-11, bei dem die alkoxylierte monofunktionelle reaktive Verbindung polydisperses

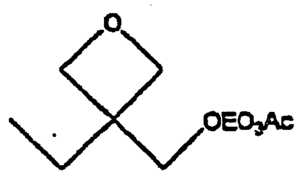

enthält oder daraus besteht.

**15.** Harz nach einem der Ansprüche 1-11, bei dem die alkoxylierte monofunktionelle reaktive Verbindung polydisperses

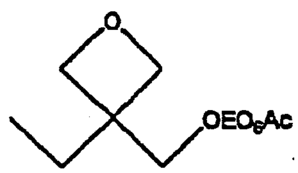

enthält oder daraus besteht.

**16.** Harz nach einem der Ansprüche 1 bis 15, bei dem die Beladung mit funktionellen Gruppen im Bereich von 0,5 bis 3 mmol/g liegt.

**17.** Harz nach einem der Ansprüche 1 bis 16, bei dem die Quellung in einer wässerigen Flüssigkeit, einschließlich Wasser, im Bereich von 2 bis 20 ml/g liegt.

**18.** Zusammensetzung, die eine Vielzahl zu Kügelchen geformter vernetzter Polymermatrices nach einem der Ansprüche 1 bis 17 enthält, wobei der mittlere Durchmesser der Kügelchen im Bereich von 0,01 bis 1500 μm liegt.

**19.** Verfahren zur Herstellung eines vernetzten und wahlweise in Form von Kügelchen vorliegenden Harzes nach einem der Ansprüche 1 bis 17 oder der Zusammensetzung nach Anspruch 18, wobei das Verfahren folgende Schritte umfasst:

a) Vorsehen eines Gemisches von alkoxylierten reaktiven Verbindungen, die ausgewählt sind unter a) alkoxylierten Verbindungen mit einer Funktionalität von mehr als eins und b) alkoxylierten monofunktionellen reaktiven Verbindungen, wobei der alkoxylierte Teil der alkoxylierten Verbindungen mit einer Funktionalität von mehr als eins ein mittleres Molekulargewicht aufweist, das von dem mittleren Molekulargewicht des alkoxylierten Teils der alkoxylierten monofunktionellen reaktiven Verbindungen verschieden ist,

b) Polymerisieren des Gemischs von alkoxylierten reaktiven Verbindungen und

c) Gewinnung eines vernetzten und gegebenenfalls in Form von Kügelchen vorliegenden Harzes nach einem der Ansprüche 1 bis 17 oder der Zusammensetzung nach Anspruch 18.

**20.** Polymerisationsverfahren nach Anspruch 19, bei dem Gemische von alkoxylierten reaktiven Verbindungen in speziellen Verhältnissen mit einem Initiator gemischt werden, wahlweise in einem Lösungsmittel und unter zu Kügelchen führenden Bedingungen.

**21.** Polymerisationsverfahren nach Anspruch 20, bei dem das Gemisch von alkoxylierten reaktiven Verbindungen mit einem Lösungsmittel gemischt wird, um eine disperse Phase zu erzeugen, die anschließend unter Rühren in eine kontinuierliche Phase eingegossen wird.

**22.** Polymerisationsverfahren nach einem der Ansprüche 19 bis 21, bei dem die Polymermatrix in Form von Kügelchen vorliegt und durch Polymerisation in Umkehrsuspension oder Umkehremulsion erhalten wird.

## Revendications

**1.** Résine comprenant une matrice polymère se composant d'une pluralité de groupes fonctionnels, dans laquelle ladite matrice polymère peut être obtenue par polymérisation d'un mélange de composés réactifs alcoxylés choisis parmi a) les composés alcoxylés ayant une fonctionnalité supérieure à un, et b) les composés réactifs monofonctionnels alcoxylés, dans laquelle la partie alcoxylée des composés alcoxylés ayant une fonctionnalité supérieure à un a un poids moléculaire moyen qui est différent du poids moléculaire moyen de la partie alcoxylée des composés réactifs monofonctionnels alcoxylés.

**2.** La résine selon la revendication 1, dans laquelle les composés alcoxylés ayant une fonctionnalité supérieure à un sont des composés réactifs di- ou oligofonctionnels alcoxylés qui sont choisis parmi le bis(3-méthyloxétane-3-méthyl) éther de polyéthylène glycol, le bis(3-éthyloxétane-3-méthyl)éther de polyéthylène glycol, le tris(3-méthyloxétane-3-méthyl)éther de triméthylolpropane éthoxylé, le tétrakis(3-méthyl-oxétane-3-méthyl)éther de pentaérythritol éthoxylé, l'éther diglycidylique de polyéthylène glycol et l'éther divinylique de triéthylène glycol, y compris toute combinaison de ceux-ci.

**3.** La résine selon l'une quelconque des revendications 1 à 2, dans laquelle les composés alcoxylés ayant une fonctionnalité supérieure à un sont des composés réactifs di- ou oligofonctionnels alcoxylés, qui sont choisis parmi les éthers de polyéthylène glycols (PEG) monodispersés ou polydispersés ayant la formule générale PEGn, dans laquelle n représente le poids moléculaire moyen (g/mol) du polyéthylène glycol.

**4.** La résine selon l'une quelconque des revendications 1 à 2, dans laquelle les composés alcoxylés ayant une fonctionnalité supérieure à un sont des composés réactifs di- ou oligofonctionnels alcoxylés qui sont sélectionnés parmi les éthers de polypropylène glycols (PPG) monodispersés ou polydispersés ayant la formule générale PPGn, dans laquelle n représente le poids moléculaire moyen (g/mol) du polypropylène glycol.

**5.** La résine selon l'une quelconque des revendications 1 à 2, dans laquelle les composés alcoxylés ayant une fonctionnalité supérieure à un sont des composés réactifs di- ou oligofonctionnels alcoxylés qui sont sélectionnés parmi les éthers de copolymères blocs ou statistiques monodispersés ou polydispersés de motifs d'éthylène glycol et de propylène glycol (PEG-PPG) ayant la formule générale (PEG-PPG)n, dans laquelle n représente le poids moléculaire moyen (g/mol) de la chaîne du copolymère.

**6.** La résine selon l'une quelconque des revendications 3 à 5, dans laquelle les composés réactifs difonctionnels alcoxylés sont choisis dans le groupe constitué par le bis(3-méthyloxétane-3-méthyl)éther de PEG400 polydispersé, le bis(3-méthyloxétane-3-méthyl)éther de PEG1000 polydispersé, le bis(3-méthyloxétane-3-méthyl)éther de PEG1500 polydispersé, le bis(3-méthyloxétane-3-méthyl)éther de PEG2000 polydispersé, le bis(3-méthyloxétane-3-méthyl)éther de PEG3000 polydispersé, le bis(3-méthyloxétane-3-méthyl)éther de PEG4000 polydispersé, le bis(3-méthyloxétane-3-méthyl)éther de PPG400 polydispersé, le bis(3-méthyloxétane-3-méthyl)éther de PPG2000 polydispersé, le bis(3-méthyloxétane-3-méthyl)éther de ran-(PEG-PPG)2500 polydispersé, et le bis(3-méthyloxétane-3-méthyl)éther de tribloc (PEG-PPG-PEG)1900 polydispersé, y compris toute combinaison de ceux-ci.

**7.** La résine selon l'une quelconque des revendications 1 à 6, dans laquelle les composés réactifs monofonctionnels alcoxylés sont sélectionnés parmi l'éther monoglycidylique de tétraéthylène glycol et l'éther vinylique de 4-hydroxybutyle.

**8.** La résine selon l'une quelconque des revendications 1 à 6, dans laquelle les composés réactifs monofonctionnels alcoxylés sont choisis dans le groupe constitué par les oxétanes éthoxylés et les oxétanes propoxylés, y compris toute combinaison des oxétanes éthoxylés et des oxétanes propoxylés.

**9.** La résine selon la revendication 8, dans laquelle les composés d'oxétanes monofonctionnels éthoxylés sont choisis parmi les composés d'oxétanes monofonctionnels éthoxylés polydispersés ayant de 2 à 30 motifs d'oxyde d'éthylène, comme l'oxétane $(OE)_2$-30, comme l'oxétane $(OE)_3$, l'oxétane $(OE)_6$, l'oxétane $(OE)_9$, l'oxétane $(OE)_{12}$ ou l'oxétane $(OE)_{15}$, y compris toute combinaison de ceux-ci.

**10.** La résine selon la revendication 8, dans laquelle les composés d'oxétanes monofonctionnels propoxylés sont choisis parmi les composés d'oxétanes monofonctionnels propoxylés polydispersés ayant de 2 à 30 motifs d'oxyde de propylène, comme l'oxétane $(OP)_{2-30}$, comme l'oxétane $(OP)_3$, l'oxétane $(OP)_6$, l'oxétane $(OP)_9$, l'oxétane $(OP)_{12}$, ou l'oxétane $(OP)_{15}$.

**11.** La résine selon l'une quelconque des revendications 8 à 10, dans laquelle l'oxétane est choisi parmi le 3-méthyloxétane-3-méthanol et le 3-éthyloxétane-3-méthanol, y compris une combinaison des deux.

**12.** La résine selon l'une quelconque des revendications 1 à 11, dans laquelle le composé réactif monofonctionnel alcoxylé comprend ou se compose de

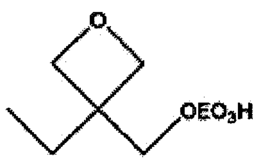

polydispersé.

**13.** La résine selon l'une quelconque des revendications 1 à 11, dans laquelle le composé réactif monofonctionnel alcoxylé comprend ou se compose de

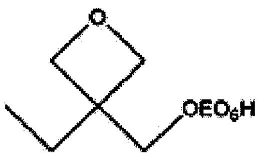

polydispersé.

**14.** La résine selon l'une quelconque des revendications 1 à 11, dans laquelle le composé réactif monofonctionnel alcoxylé comprend ou se compose de

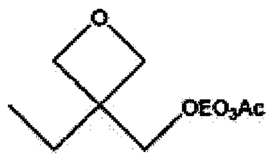

polydispersé.

**15.** La résine selon l'une quelconque des revendications 1 à 11, dans laquelle le composé réactif monofonctionnel alcoxylé comprend ou se compose de

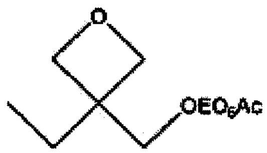

polydispersé.

**16.** La résine selon l'une quelconque des revendications 1 à 15, dans laquelle le chargement des groupes fonctionnels se situe dans la plage de 0.5 à 3 mmol/g.

**17.** La résine selon l'une quelconque des revendications 1 à 16, dans laquelle le gonflement dans un liquide aqueux, y compris l'eau, se situe dans la plage qui s'étend de 2 ml/g à 20 ml/g.

**18.** Composition comprenant une pluralité de matrices de polymère réticulées perlées selon l'une quelconque des revendications 1 à 17, dans laquelle le diamètre moyen des perles se situe dans la plage qui s'étend de 0.01 μm à 1500 μm.

**19.** Procédé pour générer une résine réticulée et le cas échéant perlée selon l'une quelconque des revendications 1 à 17 ou la composition selon la revendication 18, ledit procédé comprenant les étapes consistant à :

a) disposer d'un mélange de composés réactifs alcoxylés choisis parmi a) les composés alcoxylés ayant une fonctionnalité supérieure à un, et b) les composés réactifs monofonctionnels alcoxylés, où la partie alcoxylée des composés alcoxylés ayant une fonctionnalité supérieure à un a une poids moléculaire moyen qui est différent du poids moléculaire moyen de la partie alcoxylé des composés réactifs monofonctionnels alcoxylés,
b) polymériser le mélange des composés réactifs alcoxylés, et
c) obtenir une résine réticulée et le cas échéant perlée selon l'une quelconque des revendications 1 à 17 ou la composition selon la revendication 18.

**20.** Le procédé de polymérisation selon la revendication 19, dans lequel le mélange de composés réactifs alcoolés est mélangé avec un initiateur en des rapports spécifiques, le cas échéant dans un solvant et dans des conditions de perlage.

**21.** Le procédé de polymérisation selon la revendication 20, dans lequel le mélange de composés réactifs alcoxylés est mélangé avec un solvant pour former une phase dispersée et est ultérieurement versé dans une phase continue sous agitation.

**22.** Le procédé de polymérisation selon l'une quelconque des revendications 19 à 21, dans lequel la matrice polymère se présente sous une forme perlée et est obtenue par polymérisation en suspension inverse ou en émulsion inverse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J.RADEMANN et al.** *J.Am.Chem.Soc,* 1999, vol. 121, 5459-5466